# EUROPEAN PATENT APPLICATION

(11) **EP 1 186 249 A2**
(43) Date of publication of application: **13.03.2002**
(21) Application number: 01830579.7
(22) Date of filing: 11.09.2001
(51) Int. Cl.: A41G 5/00

(54) **Molding apparatus for preparing artificial locks of hair for hairstyles, and lock prepared in this way**

(30) Priority: 12.09.2000 IT RM000495
(71) Applicant: Lo Giudice, Angelo, 00187 Roma (RM) (IT)
(72) Inventor: Lo Giudice, Angelo, 00187 Roma (RM) (IT)
(74) Representative: Cavattoni, Fabio

(57) **Abstract**

A moulding apparatus for preparing artificial locks of hair for hairstyles comprises a die (91) with a channel and a punch (81) with a channelled profile complementary to the channel, movable transversely towards each other to exert a compressive force on the end portion of a tuft of hairs in contact with thermoplastic resin placed within the channel, and away from each other after the compression and the setting of the resin.

## Description

The present invention relates to a molding apparatus for preparing artificial locks of hair for hairstyles. It also relates to a lock prepared in this way.

The present applicant has submitted preceding patent applications relating to equipment for preparing artificial locks of hair for hairstyles, comprising a concave element or female die and a male convex punch element.

According to these applications, each artificial lock is formed by applying a quantity of thermoplastic resin to an end portion of a tuft of natural or artificial hairs resting on the female die and pressing the quantity of resin and the portion of the hairs together by means of the male punch. The end product is a tuft of hairs joined at one end portion by a claw-shaped concave thermoplastic resin cap.

The known equipment, in its various embodiments, operates efficiently, but is capable of being enhanced in ways which may be designed to improve the end product.

This is because the concave cap of the known product is unable to retain a large number of hairs of the artificial lock when this is fabricated, and is unable to surround and enclose a large number of hairs of the natural or artificial head of hair to which the artificial lock is applied.

The known equipment, whether in the form of a clamp or in that of a mechanical bench press, is equipment of the manual type as regards both control and operation. Consequently its output of artificial locks is indeed related to the skill of the operator, but is chiefly determined by the relative ease of use of a clamp or a lever press. Moreover, a manual product does not have constant characteristics, for example because the pressure exerted on the quantity of resin resting on the portion of hair varies from one operator to another, and also from one occasion to another for the same operator.

The object of the present invention is to overcome the drawbacks mentioned above.

In particular, one object of the invention is to provide an apparatus which makes it possible, on the one hand, to increase the output of locks, and on the other hand to provide a product with constant dimensional characteristics.

Another object of the invention is to provide a product which has a configuration more suitable for its application to a head of hair.

Consequently, in a first aspect of the invention, a moulding apparatus is provided for the preparation of artificial locks of hair for hairstyles, and comprises a die element with a channel and a punch element with a channelled profile complementary to the channel, these elements interacting to exert a compressive force on one end portion of a tuft of hairs in contact with a quantity of thermoplastic resin placed within the channel.

Advantageously, the apparatus consists of a fluid dynamic press.

In a second aspect of the invention, an artificial lock of hair is provided, consisting of a tuft of hairs joined at one end portion by a channelled cap of thermoplastic resin.

The present invention will now be described with reference to a preferred embodiment thereof, and on the basis of the figures of the attached drawings, in which:
Figure 1 shows a schematic front view of the apparatus according to the present invention;
Figure 2 shows, on an enlarged scale, a side view of the die and punch elements of Figure 1 interacting with each other; and
Figure 3 shows a perspective view of an example of the artificial lock of hair according to the present invention.

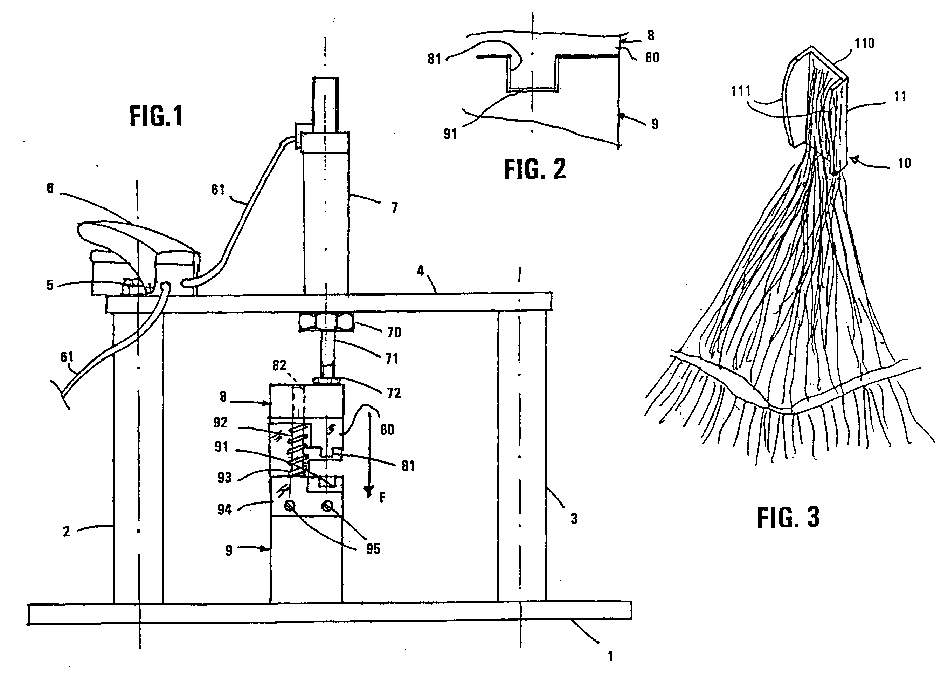

With reference to the drawings, Figure 1 shows an overall view of the moulding apparatus for preparing artificial locks of hair according to the present invention.

The moulding apparatus essentially consists of a fluid dynamic press which, in the illustrated embodiment, has a column structure which comprises a base plate 1, to which are connected a pair of columns 2 and 3 supporting an upper cross-piece 4. The columns 2 and 3 can be connected to the base plate 1 and to the upper cross-piece 4 by threaded connections. These include the visible screw 5 used to lock a manually operated valve 6 in position on the upper cross-piece. The valve 6, preferably of the two-way type, is connected on one side by means of a narrow tube 60 to a source of pressurized fluid which may be oil or air (not illustrated), and on the other side by means of a narrow tube 61 to a single-acting operating cylinder 7. The single-acting operating cylinder 7, of the oil or air type, is mounted by means of a corresponding nut 70 on the cross-piece 4 in such a way that its piston rod 71 is movable vertically under the cross-piece 4.

A punch support body 8 is connected to the piston rod 71, preferably by a threaded connection 72. The punch support body 8 is prismatically coupled to a die support element 9 integral with the base plate 1. The punch support body 8 has an L-shaped configuration, with a punch 81 with a channelled profile on its vertical surface 80. The channelled profile preferably has a square configuration. This configuration makes the punch 81 complementary to a die 91 with a similarly square-shaped channel, and the punch is positioned in such a way that it can mate with the die for an operation of moulding a C-shaped or channelled profile. The die 91 can be made in one piece in the upper portion of the die support element 9.

The die 91 and the punch 81 are shown on an enlarged scale in a partial side view in Figure 2.

At least one pair of uprights 92 is fixed on the said upper part of the die support element 9. The uprights 92 are coaxial with holes 82 made in the punch support body 8 to form a prismatic coupling. A coil spring 93, opposing the (downward) movement by which the punch support body 8 is made to approach the die support element 9, is mounted coaxially with the upright 92.

The apparatus advantageously has a transparent vertical protective shield (indicated by 94 in Figure 1), fixed adjacent to the die support element 9 with screws 95 to delimit the channelled die 91, in order to prevent possible interference by the operator with the moving parts.

For operation, the operator places a quantity of thermoplastic resin on the die 91, and then lays the end of a tuft of natural or artificial hairs thereon. The pressurized fluid is supplied through the control valve 6 to the operating cylinder 7, causing the piston rod to be moved downwards in the direction of the arrow F, against the opposing action of the coil spring 93, which again moves the die 91 away from the punch 81 after the compression exerted on the items interposed between them.

The end product is a lock 10 consisting of natural or artificial hairs, joined at one end by a cap 11 consisting of set thermoplastic resin, with a C-section profile. The hairs are embedded in the core 110 of the C-shaped profile, while they are absent from the wings 111 of the said profile. The wings 111 can have a configuration which is not completely regular, as shown in the figure. However, this does not prevent the hairs of a head of hair or a wig from being surrounded and retained, after subsequent heating of the cap, for the application of the artificial lock. In fact, because of the square shape of the profile of the cap and its greater depth, the quantity of hairs which can be retained is greater and the operation is facilitated by comparison with that which can be carried out with a cap having a concave profile. This is because this square shape of the cap increases the retention, including the lateral retention, of the lock, and improves the protection of its attachment, thus improving its hold during use and its durability.

## Claims

1. Moulding apparatus for preparing artificial locks of hair for hairstyles, these locks being formed by applying a quantity of thermoplastic resin to an end portion of a tuft of natural or artificial hairs and pressing the quantity of resin and the portion of the hairs together, **characterized in that** it comprises a die with a channel and a punch with a channelled profile complementary to the channel, these elements being movable towards each other transversely to exert a compressive force on the end portion of a tuft of hairs in contact with the thermoplastic resin placed within the channel, and away from each other after the compression and the setting of the resin.

2. Apparatus according to Claim 1, **characterized in that** it consists of a fluid dynamic press.

3. Apparatus according to Claim 2, **characterized in that** it has:
- a column structure, comprising a base plate to which is connected a pair of columns supporting an upper cross-piece;
- an operating cylinder integral with the cross-piece, having a piston rod passing downwards through the said cross-piece;
- a manual control valve, connected at one side to a pressurized fluid supply and at the other side to the operating cylinder;
- a die support element mounted on the base plate and carrying a channelled die;
- a punch support body, with a prismatic coupling to the die support element, connected to the end of the piston rod and carrying a punch with a channelled profile complementary to the die channel and capable of mating therewith;

4. Apparatus according to Claim 3, **characterized in that**:
- the operating cylinder is a single-acting cylinder,
- the manual control valve is a two-way valve;
- the prismatic coupling consists of a pair of uprights fixed to the die support element and a pair of through holes for these uprights made in the punch support element, a coil spring opposing the movement of the piston rod being fitted on each upright between the die support element and the punch support element.

5. Apparatus according to Claim 3, **characterized in that** a vertical protective shield is fixed adjacent to the die support element to delimit the channelled die.

6. Artificial lock of hair for hairstyles, produced with the apparatus according to Claim 1, **characterized in that** it has a tuft of hairs joined at one end portion by a channelled cap of thermoplastic resin.
